# EUROPEAN PATENT SPECIFICATION

(11) **EP 2 149 872 B1**
(45) Date of publication and mention of the grant of the patent: **25.05.2016**
(21) Application number: 09004626.9
(22) Date of filing: 31.03.2009
(51) Int. Cl.: G09G 3/34

(54) **Method and apparatus for driving a backlight assembly**
Verfahren und Vorrichtung zum Antreiben einer Rücklichtanordnung
Procédé et appareil de commande d'un ensemble de rétroéclairage

(30) Priority: 28.07.2008 KR 20080073591
(43) Date of publication of application: 03.02.2010
(73) Proprietor: Samsung Display Co., Ltd., Gyeonggi-do (KR)
(72) Inventor: Cho, Chi-O, Asan-si Chungcheongnam-do (KR); Kim, Seon-Bae, Asan-si Chungcheongnam-do (KR); Nam, Seok-Hyun, Seoul (KR)
(74) Representative: Dr. Weitzel & Partner

(56) References cited:
- WO-A-2008/038911
- US-A1- 2003 108 098
- US-A1- 2006 125 767

## Description

### BACKGROUND OF THE INVENTION

### 1. Field of the Invention

The present invention relates generally to liquid crystal displays. More specifically, the present invention relates to driving liquid crystal display backlights.

### 2. Description of the Related Art

Liquid crystal displays are one of the most commonly used flat panel displays. Liquid crystal displays commonly include a first substrate having a plurality of pixel electrodes thereon, a second substrate having a common electrode, and a liquid crystal layer having a dielectric anisotropy interposed between the first and second substrates. Liquid crystal displays display images by applying voltages between the pixel electrode and the common electrode, to generate an electric field in the liquid crystal layer. This field orients liquid crystal molecules in the liquid crystal layer to adjust polarization of incident light.

The liquid crystal display is typically not a self-emitting device. Hence, it may require a lamp as a light source in the rear of a liquid crystal display (LCD) panel. The lamp is commonly supplied with power through an inverter to generate light, and utilizes a pulse width modulation (PWM) signal in order to adjust brightness of light.

The PWM signal may overlap with various signals used in the liquid crystal display, resulting in waterfall noise.

US 2006/125767 A1 discloses a backlight assembly configured to perform a pulse with modulation dimming control. A pulse signal having a duty ratio dependent on a signal provided from a signal controller is generated as the pulse width modulation (PWM) control signal. The PWM control signal drives the backlight in an on-state during a predetermined time of a horizontal scan period and in an off-state during the remaining time. The frequency of the PWM control signal is equal to multiples of a frame frequency, which is a driving frequency of the liquid crystal.

WO 2008/038911 A discloses a liquid crystal device (LCD) including an inverter. The inverter supplies alternating current power to a backlight lamp. Further, the LCD includes a dimming circuit for continuously varying the brightness of the backlight lamp. A pulse width modulated dimming, also referred to as a burst mode type dimming, is disclosed. In order to improve the video quality of the LCD it is proposed to allow an inverter to operate in a variable frequency type rather than in a specific frequency type. The pulse width modulation frequency is varied from the initial pulse width modulation operating frequency within a predetermined range.

US 2003/108098 A1 discloses pulse width modulated amplifiers for audio and PWM motor controllers. In order to reduce problems related with EMI from high frequencies switching content, to reduce non-linear distortion products, and to avoid complex calculations a random carrier frequency is applied.

### SUMMARY OF THE INVENTION

A backlight assembly according to the present invention is defined by appended claims 1 and 8. Claims 2 to 7 define preferred embodiments of the invention also comprising a display apparatus with a corresponding backlight assembly.

According to an aspect of the present invention, there is provided a backlight assembly including a pulse width modulation signal output unit receiving a dimming signal and outputting a pulse width modulation signal having a duty ratio corresponding to the dimming signal and having various periods, and a light source emitting light based on the pulse width modulation signal.

According to another aspect of the present invention, there is provided a display apparatus including a display panel receiving an image signal and outputting an image, and a backlight assembly supplying the display panel with light, the backlight assembly comprising a pulse width modulation signal output unit receiving a dimming signal and outputting a pulse width modulation signal having a duty ratio corresponding to the dimming signal and having various periods, and a light source emitting light based on the pulse width modulation signal.

According to another aspect of the present invention, a method of driving the display apparatus comprises providing a dimming signal, and outputting a pulse width modulation signal having a duty ratio corresponding to the dimming signal and having various periods. The method further includes emitting light based on the pulse width modulation signal, and receiving the light and displaying an image in response to an input image signal.

### BRIEF DESCRIPTION OF THE DRAWINGS

The above and other features and advantages of the present invention will become more apparent by describing in detail preferred embodiments thereof with reference to the attached drawings in which:
FIG. 1 is a block diagram for explaining a liquid crystal display apparatus according to a first embodiment of the present invention and a driving method of the liquid crystal display;
FIG. 2A is a signal diagram of a pulse width modulation (PWM) signal output unit shown in FIG. 1;
FIG. 2B is a signal diagram of a DC-AC inverter shown in FIG. 1;
FIG. 3 is a block diagram of the PWM signal output unit shown in FIG. 1;
FIG. 4A is a signal diagram of a pulse width modulation (PWM) signal output unit shown in FIG. 3;
FIG. 4B is a graph illustrating a PWM signal shown in FIG. 4A;
FIG. 5 is a block diagram of a random frequency signal generator shown in FIG. 3;
FIG. 6 is a block diagram for explaining a liquid crystal display apparatus according to a second embodiment of the present invention and a driving method of the liquid crystal display;
FIG. 7 is a block diagram for explaining a liquid crystal display apparatus according to a third embodiment of the present invention and a driving method of the liquid crystal display;
FIG. 8 is a block diagram for explaining a liquid crystal display apparatus according to a fourth embodiment of the present invention and a driving method of the liquid crystal display;
FIG. 9 is a circuit diagram of a backlight driver shown in FIG. 8;
FIG. 10 is a block diagram for explaining a liquid crystal display apparatus according to a fifth embodiment of the present invention and a driving method of the liquid crystal display;
FIG. 11 is a block diagram illustrating arrangement of a light source shown in FIG. 10; and
FIG. 12 is a diagram illustrating the operation of a liquid crystal display shown in FIG. 10.

### DETAILED DESCRIPTION OF THE INVENTION

Advantages and features of the present invention and methods of accomplishing the same may be understood more readily by reference to the following detailed description of preferred embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will only be defined by the appended claims. Like reference numerals refer to like elements throughout the specification.

It will be understood that when an element or layer is referred to as being "on" or "connected to" another element or layer, it can be directly on or connected to the other element or layer or intervening elements or layers may be present. In contrast, when an element is referred to as being "directly on" "directly connected to" another element or layer, there are no intervening elements or layers present. As used herein, the term "and/or" includes any and all combinations of one or more of the associated listed items.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, the present invention will be explained in detail with reference to a liquid crystal display by way of example of a display apparatus.

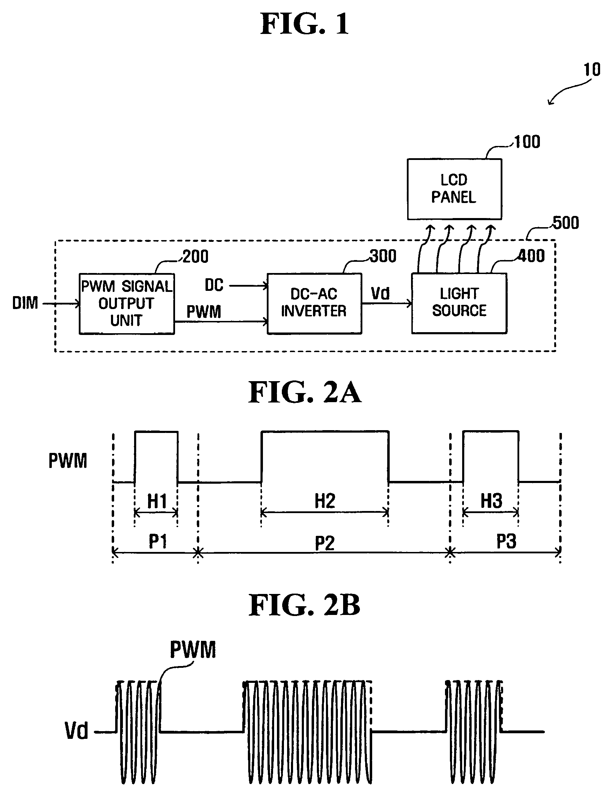

A liquid crystal display according to a first embodiment of the present invention and a driving method of this liquid crystal display will be described with reference to FIGS. 1 through 3. FIG. 1 is a block diagram illustrating a liquid crystal display apparatus according to a first embodiment of the present invention. FIG. 2A is a signal diagram for the pulse width modulation (PWM) signal output unit of FIG. 1, and FIG. 2B is a signal diagram for the digital-to-analog (DC-AC) inverter of FIG. 1.

Referring to FIG. 1, the liquid crystal display 10 includes an LCD panel 100 displaying an image, and a backlight assembly 500 providing light to the LCD panel 100. The backlight assembly 500 may include a pulse width modulation (PWM) signal output unit 200, a DC-AC inverter 300, and a light source 400.

The LCD panel 100 includes a plurality of gate lines (not shown), a plurality of data lines (not shown), and pixel electrodes (not shown) formed at intersections of the gate lines and the data lines, thereby displaying images.

The pulse width modulation signal PWM output unit 200 receives a dimming signal DIM, and outputs a pulse width modulation signal PWM with a duty ratio corresponding to DIM and having various periods. For example, as shown in FIG. 2A, the pulse width modulation signal PWM output unit 200 outputs a pulse width modulation signal PWM having irregular, varying periods. That is to say, as shown in FIG. 2A, periods P1, P2, and P3 are different from on another (P1 ≠ P2 ≠ P3). However, the duty ratio of the pulse width modulation signal PWM has a predetermined voltage level corresponding to the dimming signal DIM. In FIG. 2A, for the first period P1, the duty ratio is H1/P1. For the second period P2, the duty ratio is H2/P2. For the third period P3, the duty ratio is H3/P3. The respective ratios satisfy the following relationship (H1/P1)= (H2/P2)= (H3/P3).

The DC-AC inverter 300 receives a boosted direct-current (DC) voltage from an external device, e.g., a D/A converter (not shown), converts the DC voltage into an AC voltage when the pulse width modulation signal PWM has a high level, and outputs an AC driving voltage Vd. In more detail, the DC-AC inverter 300, which includes a switch element (not shown), outputs an AC driving voltage Vd that is modulated by the PWM signal, as shown in FIG. 2B.

The light source 400 receives the AC driving voltage Vd and emits light accordingly. The brightness of the light source 400 is adjusted according to the duty ratio of the pulse width modulation signal PWM. Here, the light source 400 may be a line light source 400. Examples of the light source 400 include a cold cathode fluorescent lamp (CCFL), a hot cathode fluorescent lamp (HCFL), or an external electrode fluorescent lamp (EEFL). However, the light source 400 is not limited to the illustrated line light source 400, and any type of light source 400 can be employed, as long as it can receive an AC driving voltage Vd and emit light.

In summary, the backlight assembly 500 supplies light based on a pulse width modulation signal PWM that has a duty ratio corresponding to the dimming signal DIM. Here, the duty ratio of the pulse width modulation signal PWM corresponds to a voltage of the dimming signal DIM. The pulse width modulation signal PWM may have various periods. Periods of the pulse width modulation signal PWM, for example, may be random.

Further, the pulse width modulation signal PWM may have a random frequency determined in varying manners within a predetermined range. Since the frequency is inversely proportional to the period, the periods of the pulse width modulation signal PWM correspond to the random frequency.

Here, the maximum random frequency is a frequency at which the response of the light source begins to drop off, with respect to switch speed. The minimum random frequency is a frequency at which flickering starts to occur in the LCD panel. For example, the random frequency can be determined according to maximum, minimum, and center frequencies. Here, the minimum random frequency can be -10% and the maximum random frequency can be +10%, based on the center frequency.

The center frequency can be adjusted according to the operating frequency of the display apparatus, and/or the operating frequency of a light source. For example, the operating frequency of the display apparatus may be associated with the upper limit of the center frequency, and the operating frequency of the light source may be associated with the lower limit of the center frequency.

As described above, when the periods of the pulse width modulation signal PWM are different, that is, when the frequencies of the pulse width modulation signal PWM are not regular, waterfall noise is reduced. In more detail, various signals used in the liquid crystal display 10 have different frequencies. For example, a gate clock signal, the AC driving voltage Vd, and the pulse width modulation signal PWM each indicate activation starting timings of various gate lines (not shown) of the LCD panel 100, where each can also have differing frequencies. In a case where the frequencies of these signals overlap with one another, beats are generated, so that brightness differences of the LCD panel 100 varies at regular intervals, resulting in waterfall noise. However, these "beats" can be prevented if the frequency of the pulse width modulation signal PWM is not regular. Even if these beats are generated, a brightness difference of the LCD panel 100 may not occur at regular intervals. Accordingly, in a case where the periods of the pulse width modulation signal PWM are different, that is, in a case where the frequencies of the pulse width modulation signal PWM are not regular, waterfall noise can be reduced.

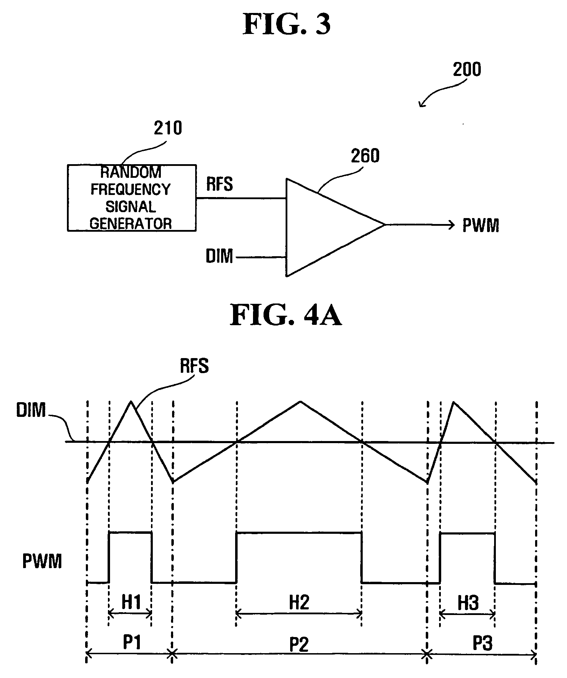

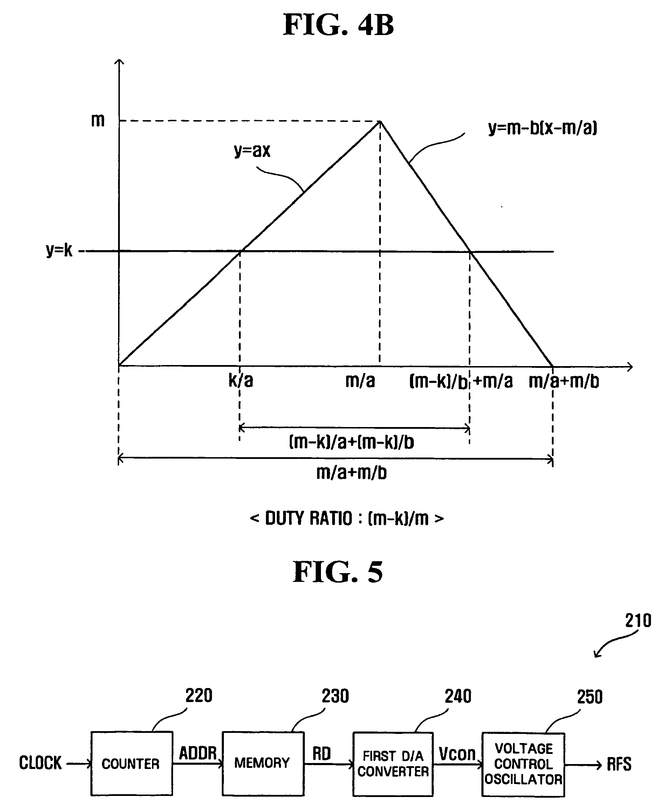

Hereinafter, a method of generating the pulse width modulation signal PWM shown in FIG. 2A will be described with reference to FIGS. 3 through 5. FIG. 3 is a block diagram of the PWM signal output unit shown 200 in FIG. 1. FIG. 4A is a signal diagram of the pulse width modulation (PWM) signal output unit 200 of FIG. 3, and FIG. 4B is a graph illustrating the PWM signal of FIG. 4A. FIG. 5 is a block diagram of a random frequency signal generator 210 shown in FIG. 3.

Referring first to FIG. 3, the pulse width modulation signal PWM output unit 200 includes a random frequency signal generator 210 and a comparator 260. The random frequency signal generator 210 generates a random frequency signal RFS having random frequencies. For example, as shown in FIG. 4A, the random frequency signal generator 210 may generate triangular waves having periods P1, P2, and P3, which are different from each other, i.e., P1 ≠ P2 ≠ P3. The random frequency signal generator 210 will be described below, with reference to FIG. 5.

The comparator 260 compares a voltage level of the random frequency signal RFS with that of the dimming signal DIM, and outputs the comparison result. For example, if the voltage level of the dimming signal DIM is higher than that of the random frequency signal RFS, the comparator 260 outputs a high level signal. If the voltage level of the dimming signal DIM is lower than that of the random frequency signal RFS, the comparator 260 outputs a low level signal. That is, the comparator 260 outputs the pulse width modulation signal PWM shown in FIG. 4A. In this case, although the pulse width modulation signal PWM has random frequencies, the duty ratio of the pulse width modulation signal PWM is constant. Here, the duty ratio of the pulse width modulation signal PWM is determined by the voltage level of the dimming signal DIM.

In more detail, one cyclic period of the random frequency signal RFS shown in FIG. 4A can be graphically illustrated on a coordinates plane by two plots, y=ax and y=m-b (x-m/a), as shown in FIG. 4B. The dimming signal DIM can be represented by the equation y=k.

As shown in FIG. 4B, the duration that lines y=ax and y=m-b(x-m/a) exceed y=k can be expressed as (m-k)/a+(m-k)/b, and a length of a cyclic period is m/a+m/b. Here, the duty ratio is (m-k)/m. That is to say, the duty ratio is determined by values of m and k, where m is an amplitude of the random frequency signal RFS, and k is a voltage level of the dimming signal DIM. As a result, when the amplitude of the random frequency signal RFS is constant, the duty ratio is independent of the frequency of the random frequency signal RFS and varies according to the voltage level of the dimming signal DIM.

As shown in FIGS. 3 and 4A, when the voltage level of the dimming signal DIM is boosted, the duty ratio of the pulse width modulation signal PWM is reduced. Conversely, when the voltage level of the dimming signal DIM is lowered, the duty ratio of the pulse width modulation signal PWM may be increased. Meanwhile, the PWM signal output unit 200 may output a pulse width modulation signal PWM, with a duty ratio that is increased when the voltage level of the dimming signal DIM is boosted, and reduced when the voltage level of the dimming signal DIM is lowered. Here, the comparator 260 may include an operational amplifier.

The random frequency signal generator 210 shown in FIG. 3 will be described in greater detail with reference to FIG. 5. However, the random frequency signal generator 210 is not limited to the example illustrated in the following description. Referring to FIG. 5, the random frequency signal generator 210 includes a counter 220, a memory 230, a first D/A converter 240, and a voltage controlled oscillator 250.

The memory 230 stores random data RD.

The counter 220 receives a clock signal CLOCK, counts the clock signal CLOCK, and outputs the counted result as an address signal ADDR indicating the address of the memory 230. For example, the clock signal CLOCK may be an external signal separately supplied from an external device, or one of the internal signals used in the liquid crystal display 10.

The first D/A converter 240 reads out random data RD from the memory 230 in response to the address signal ADDR. For example, the first D/A converter 240 reads out the random data RD corresponding to the address signal ADDR. The first D/A converter 240 converts the read-out random data RD into a control voltage Vcon in an analog form.

The voltage controlled oscillator 250 outputs the random frequency signal RFS, the frequency of which varies according to the voltage level of the control voltage Vcon. Since the voltage controlled oscillator 250 is a well-known circuit, a detailed explanation of its operation will not be given, and it is noted that the invention is not limited to any type of the voltage controlled oscillator 250.

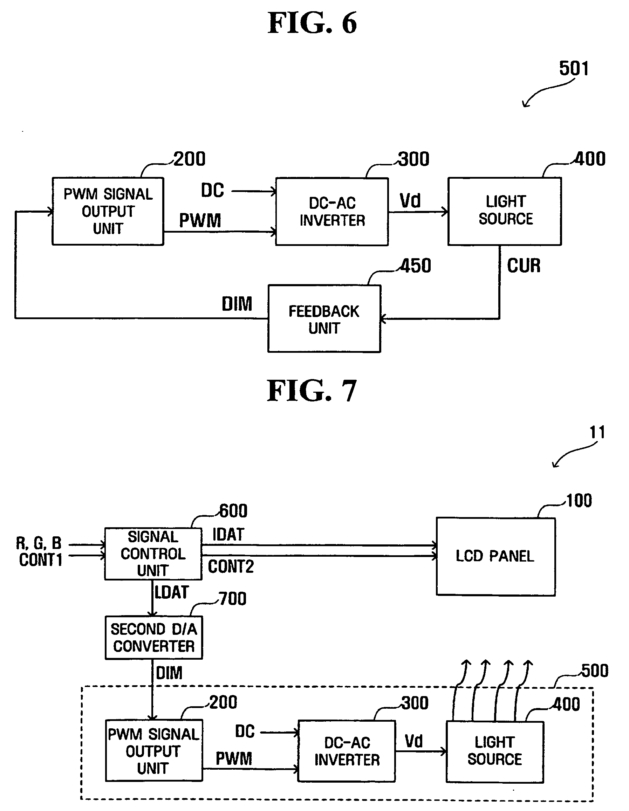

A liquid crystal display apparatus according to a second embodiment of the present invention and a driving method of the liquid crystal display will be described with reference to FIG. 6. FIG. 6 is a block diagram of a liquid crystal display apparatus according to a second embodiment of the present invention. For convenience of illustration, the same functional elements as those shown in FIG. 1 are represented by the same reference numerals, and a detailed description thereof will be omitted.

Referring to FIG. 6, unlike in the previous embodiment, the backlight assembly 501 according to the current embodiment further includes a feedback unit 450. For example, the feedback unit 450 is used to maintain a brightness of the light source 400 at a constant level.

In more detail, the feedback unit 450 receives current CUR fed back from the light source 400 flowing therein, and adjusts a voltage level of the dimming signal DIM, as follows.

If an amount of current CUR flowing in the light source 400 is increased, the feedback unit 450 boosts the voltage level of the dimming signal DIM. If the voltage level of the dimming signal DIM is boosted, the duty ratio of the pulse width modulation signal PWM is reduced, as shown in FIG. 4. If the duty ratio of the pulse width modulation signal PWM is reduced, a time during which the AC driving voltage Vd is supplied to the light source 400 is reduced, and the amount of current CUR flowing through the light source 400 is reduced.

Conversely, if the amount of current CUR flowing in the light source 400 is reduced, the feedback unit 450 lowers the voltage level of the dimming signal DIM to increase the amount of current CUR flowing in the light source 400. In other words, the feedback unit 450 detects the amount of current CUR flowing in the light source 400, and adjusts the voltage level of the dimming signal DIM to maintain a brightness of the light source 400 at a constant level. In an exemplary embodiment, the feedback unit 450, including a resistor (not shown), converts the current CUR flowing through the light source 400 into a voltage to output the dimming signal DIM.

When overcurrent flows in the light source 400, the feedback unit 450 may adjust the voltage level of the dimming signal DIM, thereby preventing the AC driving voltage Vd from being applied to the light source 400. Alternatively, the feedback unit 450 may adjust the voltage level of the dimming signal DIM by detecting the voltage applied to the light source 400.

Next, a liquid crystal display apparatus and driving method according to a third embodiment of the present invention is described with reference to FIG. 7. FIG. 7 is a block diagram of a liquid crystal display apparatus according to a third embodiment of the present invention. For convenience of illustration, the same functional elements as those shown in FIG. 1 are represented by the same reference numerals, and a detailed description thereof will be omitted.

The liquid crystal display 11 according to the current embodiment further includes a signal control unit 600 and a second D/A converter 700.

The signal control unit 600 receives R, G, B image signals R, G, B and external control signals CONT1, and outputs image data signals IDAT and internal control signals CONT2. The image data signals IDAT may include, for example, signals converted from R, G, B image signals for improving a response speed and display quality. The control signals CONT1 may include, for example, a vertical synchronizing signal Vsync, a horizontal synchronizing signal, a main clock, a data enable signal, etc. The internal control signals CONT2 are used to drive the LCD panel 100, and examples thereof may include a vertical synchronizing start signal indicating the start of a gate driver (not shown), a gate clock signal determining the output time of the gate-on voltage, an output enable signal determining a pulse width of the gate-on voltage, a horizontal synchronizing start signal indicating the start of a data driver (not shown), an output instruction signal instructing data voltages to be output, etc.

In addition, the signal control unit 600 may output a digital light data signal LDAT for adjusting a brightness of the light source 400 in response to the R, G, B image signals. For example, the signal control unit 600 determines whether the brightness of the light source 400 is to be increased or decreased in response to the R, G, B image signals, and outputs the light data signal LDAT based on the determination result. In a case where the R, G, B image signals render a dark image, the signal control unit 600 outputs the light data signal LDAT in order to reduce the brightness of the light source 400. On the other hand, in a case where the R, G, B image signals render a bright image, the signal control unit 600 outputs the light data signal LDAT in order to increase the brightness of the light source 400. Alternatively, according to whether the R, G, B image signals render a moving image or a still image, the signal control unit 600 may output the light data signal LDAT in order to adjust the brightness of the light source 400.

The second D/A converter 700 converts the digital light data signal LDAT into dimming signal DIM in analog form, and outputs the same.

As described above, the backlight assembly 500 outputs the pulse width modulation signal PWM in response to a voltage level of the dimming signal DIM, and adjusts the brightness of the light source 400 according to the duty ratio of the pulse width modulation signal PWM. As described above, the duty ratio of the pulse width modulation signal PWM is determined by the voltage level of the dimming signal DIM, and the periods of the pulse width modulation signal PWM are random.

The signal control unit 600 may be embedded in the second D/A converter 700 or in the backlight assembly 500.

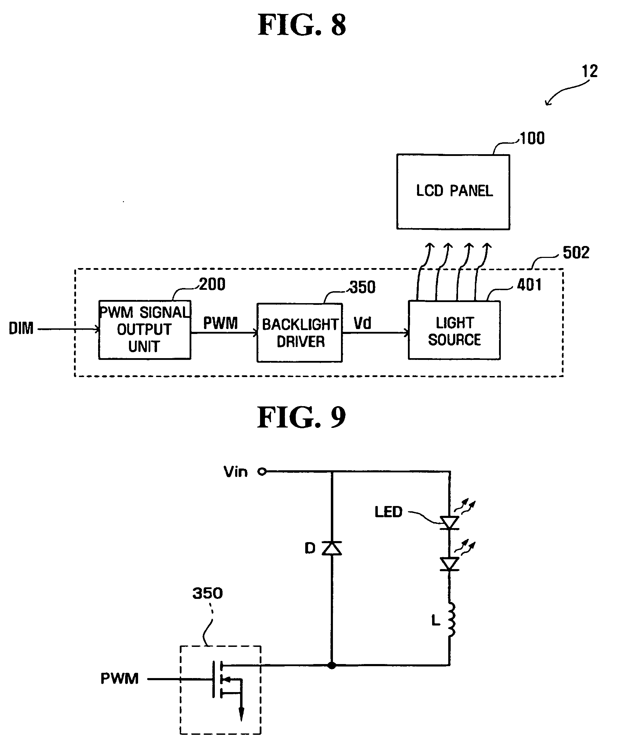

A liquid crystal display apparatus and method of driving according to a fourth embodiment of the present invention are now described with reference to FIGS. 8 and 9.

FIG. 8 is a block diagram of a liquid crystal display apparatus according to a fourth embodiment of the present invention, and FIG. 9 is a circuit diagram of the backlight driver of FIG. 8. For convenience of illustration, the same functional elements as those shown in FIG. 1 are represented by the same reference numerals, and a detailed description thereof is omitted.

Referring to FIG. 8, the backlight assembly 502 of the current embodiment includes a pulse width modulation signal PWM output unit 200, a backlight driver 350, and a light source 401. In the following description, the light source 401 of the invention will be described with regard to a light emitting diode by way of example, but the invention is not limited thereto.

In more detail, as shown in FIG. 9, the backlight driver 350 includes a switching element that operates light emitting diode LED in response to the pulse width modulation signal PWM.

The operation of the backlight driver 350 will now be described. If the switching element of the backlight driver 350 is turned on upon receiving a high-level pulse width modulation signal PWM, a driving voltage Vd is supplied to the light emitting diode LED, so that current flows through the light emitting diode LED and an inductor L. Here, energy derived from the current is stored in the inductor L. If the pulse width modulation signal PWM goes low, the switching element is turned off. Then, the light emitting diode LED, the inductor L and a diode D constitute a closed circuit. Here, the energy stored in the inductor L is discharged and the amount of current is reduced. A time at which the switching element is turned on is adjusted according to the duty ratio of the pulse width modulation signal PWM, thereby controlling the brightness of the light emitting diode LED according to the duty ratio of the pulse width modulation signal PWM.

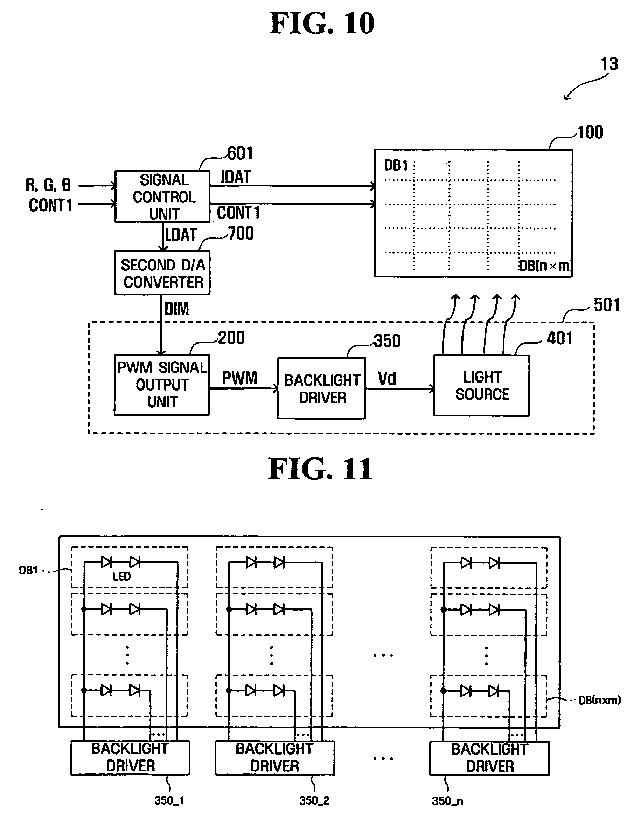

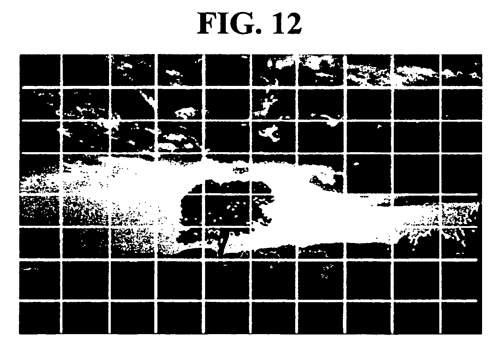

Hereinafter, a liquid crystal display apparatus and driving method according to a fifth embodiment of the present invention is described with reference to FIGS. 10 through 12. FIG. 10 is a block diagram of a liquid crystal display apparatus according to a fifth embodiment of the present invention. FIG. 11 is a block diagram illustrating arrangement of a light source shown in FIG. 10, and FIG. 12 is a diagram illustrating operation of the liquid crystal display shown in FIG. 10. For convenience of illustration, the same functional elements as those shown in FIG. 8 are represented by the same reference numerals, and a detailed description thereof is omitted.

Referring to FIG. 10, the LCD panel 100 can be divided into a plurality of display blocks DB1-DB(n×m). For example, the plurality of display blocks DB1-DB(n×m) may be arranged in an (n×m) matrix. Each of the plurality of display blocks DB1-DB(n×m) includes a plurality of pixels.

As shown in FIG. 11, a plurality of light sources 401 are arranged to provide light. That is to say, the plurality of light sources 401 are arranged to correspond to the display blocks arranged in a matrix, where each light source may include at least one light emitting diode LED. The plurality of light sources 401 are connected to the respective backlight drivers 350_1-350_n, and the brightness is adjusted according to images displayed on the respective display blocks DB1-DB(n×m), which will be described in more detail with reference to FIG. 12.

In a case where R, G, and B image signals render an image shown in FIG. 12, it is possible to determine the brightness of each display block. For example, the brightness of a lower part of the LCD panel 100 is low, while the brightness of an intermediate part of the LCD panel 100 is high. Accordingly, the signal controller 601 receives the R, G, and B image signals and determines the brightness of each of the display blocks DB1-DB(n×m) based on the received R, G, and B image signals. In addition, in order to adjust the brightness of each of the light sources 401 corresponding to the display blocks DB1-DB(n×m), the signal controller 601 may output a light data signal LDAT corresponding to the brightness of each of the display blocks DB1-DB(n×m).

The second D/A converter 700 receives the light data signal LDAT, converts the same into a dimming signal DIM, and outputs the dimming signal DIM to the pulse width modulation signal PWM output unit 200. The pulse width modulation signal PWM output unit 200 receives the dimming signal DIM and outputs the pulse width modulation signal PWM.

As described above, the backlight driver 350 receives the dimming signal DIM and adjusts the brightness of the light source 400, e.g., a light emitting diode LED.

In this case, since the brightness of the light source 401 is adjusted according to the brightness of an image, the contrast is increased, thereby improving display quality.

As described above, the duty ratio of the pulse width modulation signal PWM is determined by the voltage level of the dimming signal, and the periods of the pulse width modulation signal PWM are random. Accordingly, waterfall noise can be reduced while also improving display quality.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A backlight assembly (500), comprising:
a pulse width modulation signal output unit (200) adapted to receive a dimming signal (DIM) and to output a pulse width modulation signal (PWM) having a duty ratio corresponding to the voltage level of the dimming signal;
a light source (400) adapted to emit light based on said pulse width modulation signal (PWM),
**characterized in that**
the pulse width modulation signal output unit (200) includes a random frequency signal generator (210) adapted to output a random frequency signal (RFS) having various periods and a comparator (260) comparing a voltage level of the random frequency signal (RFS) having various periods with that of the dimming signal (DIM), and is adapted to output said pulse width modulation signal (PWM) having various periods (P1, P2, P3) according to the comparison,
wherein, for any specific voltage level of the dimming signal, the duty ratio of the pulse width modulation signal remains constant for all of the various periods (P1, P2, P3).

2. The backlight assembly of claim 1, wherein the random frequency signal generator (210) is adapted to output the random frequency signal in response to a voltage level of a control voltage.

3. The backlight assembly of claim 2, wherein the random frequency signal generator (210) further includes a memory (230) adapted to store random data, and a digital-to-analog converter (240) reading the random data from the memory (230) in response to an address signal and adapted to output the control voltage in analog form, the control voltage corresponding to the random data.

4. The backlight assembly of claim 1, further comprising a feedback unit (450) adapted to receive at least one of a current fed back from the light source (400, 401) and a voltage applied to the light source (400, 401), the feedback unit (450) being adapted to adjust the voltage level of the dimming signal.

5. The backlight assembly of claim 1, further comprising a digital-to-analog converter (700) adapted to receive a light data signal from a signal control unit (600, 601), the light data signal being a digital signal, and to output the dimming signal as an analog signal corresponding to said light data signal.

6. The backlight assembly of claim 1, further comprising a switching unit enabled by the pulse width modulation signal and adapted to supply the light source (400, 401) with a driving voltage, the light source (400, 401) receiving the driving voltage and emitting light according to it.

7. A display apparatus (10, 11, 12, 13) comprising: a display panel (100) receiving an image signal and outputting an image; and a backlight assembly (500, 501, 502) according to one of claims 1 to 6 supplying the display panel (100) with light.

8. A method of driving a backlight assembly (500, 501, 502), comprising the steps of:
a) providing a dimming signal and outputting a pulse width modulation signal having a duty ratio corresponding to a voltage level of the dimming signal and having various periods;
b) providing said pulse width modulation signal to a light source (400) that emits light based on the pulse width modulation signal;
the method **characterized by**
c) comparing the voltage of a random frequency signal having various periods to that of the dimming signal, and outputting the pulse width modulation signal based on the comparison result,
wherein, for any specific voltage level of the dimming signal, the duty ratio of the pulse width modulation signal remains constant for all of the various periods (P1, P2, P3),
thereby adjusting a brightness of a light source (400, 401) according to the duty ratio of the pulse width modulation signal.

## Patentansprüche

1. Hintergrundbeleuchtungseinheit (500), umfassend:
eine Pulsweitenmodulationssignal-Ausgabeeinheit (200), die dafür geeignet ist, ein Dimmsignal (DIM) zu empfangen und ein Pulsweitenmodulationssignal (PWM) auszugeben, das ein Tastverhältnis aufweist, das dem Spannungspegel des Dimmsignals entspricht;
eine Lichtquelle (400), die dafür geeignet ist, auf Basis des Pulsweitenmodulationssignals (PWM) Licht auszusenden,
**dadurch gekennzeichnet, dass**
die Pulsweitenmodulationssignal-Ausgabeeinheit (200) Folgendes umfasst: einen Zufallsfrequenzsignal-Generator (210), der dafür geeignet ist, ein Zufallsfrequenzsignal (RFS) auszugeben, das verschiedene Perioden aufweist, und eine Vergleichseinrichtung (260), die einen Spannungspegel des Zufallsfrequenzsignals (RFS), das verschiedene Perioden aufweist, mit jenem des Dimmsignals (DIM) vergleicht, und dafür geeignet ist, das Pulsweitenmodulationssignal (PWM), das verschiedene Perioden (P1, P2, P3) aufweist, gemäß dem Vergleich auszugeben,
wobei bei jedem spezifischen Spannungspegel des Dimmsignals das Tastverhältnis des Pulsweitenmodulationssignals für sämtliche der verschiedenen Perioden (P1, P2, P3) konstant bleibt.

2. Hintergrundbeleuchtungseinheit nach Anspruch 1, wobei der Zufallsfrequenzsignal-Generator (210) dafür geeignet ist, das Zufallsfrequenzsignal in Reaktion auf einen Spannungspegel einer Steuerspannung auszugeben.

3. Hintergrundbeleuchtungseinheit nach Anspruch 2, wobei der Zufallsfrequenzsignal-Generator (210) ferner Folgendes umfasst: einen Speicher (230), der dafür geeignet ist, Zufallsdaten zu speichern, und einen Digital-Analog-Wandler (240), der in Reaktion auf ein Adresssignal die Zufallsdaten aus dem Speicher (230) ausliest und dafür geeignet ist, die Steuerspannung in analoger Form auszugeben, wobei die Steuerspannung den Zufallsdaten entspricht.

4. Hintergrundbeleuchtungseinheit nach Anspruch 1, ferner umfassend eine Rückmeldeeinheit (450), die dafür geeignet ist, wenigstens eines aus einem von der Lichtquelle (400, 401) rückgespeisten Strom und einer an die Lichtquelle (400, 401) angelegten Spannung zu empfangen, wobei die Rückmeldeeinheit (450) dafür geeignet ist, den Spannungspegel des Dimmsignals anzupassen.

5. Hintergrundbeleuchtungseinheit nach Anspruch 1, ferner umfassend einen Digital-Analog-Wandler (700), der dafür geeignet ist, ein Lichtdatensignal von einer Signalsteuereinheit (600, 601) zu empfangen, wobei das Lichtdatensignal ein digitales Signal ist, und das Dimmsignal als analoges Signal, das dem Lichtdatensignal entspricht, auszugeben.

6. Hintergrundbeleuchtungseinheit nach Anspruch 1, ferner umfassend eine Schalteinheit, die durch das Pulsweitenmodulationssignal eingeschaltet wird und dafür geeignet ist, die Lichtquelle (400, 401) mit einer Ansteuerspannung zu versorgen, wobei die Lichtquelle (400, 401) die Ansteuerspannung empfängt und ihr gemäß Licht aussendet.

7. Anzeigevorrichtung (10, 11, 12, 13), umfassend: ein Anzeigefeld (100), das ein Bildsignal empfängt und ein Bild ausgibt; und eine Hintergrundbeleuchtungseinheit (500, 501, 502) nach einem der Ansprüche 1 bis 6, die das Anzeigefeld (100) mit Licht versorgt.

8. Verfahren zum Ansteuern einer Hintergrundbeleuchtungseinheit (500, 501, 502), umfassend die folgenden Schritte:
a) Bereitstellen eines Dimmsignals und Ausgeben eines Pulsweitenmodulationssignals, das ein Tastverhältnis aufweist, das einem Spannungspegel des Dimmsignals entspricht, und das verschiedene Perioden aufweist;
b) Bereitstellen des Pulsweitenmodulationssignals an eine Lichtquelle (400), die auf Basis des Pulsweitenmodulationssignals Licht aussendet;
wobei das Verfahren **gekennzeichnet ist durch** das
c) Vergleichen der Spannung eines Zufallsfrequenzsignals, das verschiedene Perioden aufweist, mit jener des Dimmsignals, und Ausgeben des Pulsweitenmodulationssignals auf Basis des Vergleichsergebnisses,
wobei bei jedem spezifischen Spannungspegel des Dimmsignals das Tastverhältnis des Pulsweitenmodulationssignals für sämtliche der verschiedenen Perioden (P1, P2, P3) konstant bleibt,
wodurch eine Helligkeit einer Lichtquelle (400, 401) gemäß dem Tastverhältnis des Pulsweitenmodulationssignals angepasst wird.

## Revendications

1. Un assemblage de rétroéclairage (500) comprenant :
Une unité de sortie du signal modulation d'impulsions en durée (200) adaptée pour recevoir un signal de gradation (DIM) et pour faire sortir un signal de modulation d'impulsions en durée (PWM) ayant un facteur de marche correspondant au niveau de tension du signal de gradation ;
Une source de lumière (400) adaptée pour émettre de la lumière basée sur ledit signal de modulation d'impulsions en durée (PWM),
**Caractérisé en ce que**
L'unité de sortie du signal modulation d'impulsions en durée (200) inclut un générateur de signal de fréquence aléatoire (210) adapté pour faire sortir un signal de fréquence aléatoire (RFS) ayant plusieurs périodes et un comparateur (260) comparant un niveau de tension du signal de fréquence aléatoire (RFS) ayant plusieurs périodes avec celle du signal de gradation (DIM), et qui est adapté pour faire sortir ledit signal modulation d'impulsions en durée (PWM) ayant plusieurs périodes (P1, P2, P3) selon la comparaison,
Où, pour tout niveau de tension spécifique du signal de gradation, le facteur de marche du signal de modulation d'impulsions en durée reste constant pour toutes les différentes périodes (P1, P2, P3).

2. L'assemblage de rétroéclairage de la revendication 1, où le générateur de signal de fréquence aléatoire (210) est adapté pour faire sortir le signal de fréquence aléatoire en réponse à un niveau de tension d'une tension de contrôle.

3. L'assemblage de rétroéclairage de la revendication 2, où le générateur de signal de fréquence aléatoire (210) inclut de plus une mémoire (230) adaptée pour stocker des données aléatoires, et un convertisseur numérique - analogique (240) lisant les données aléatoires de la mémoire (230) en réponse à un signal d'adresse et adapté pour faire sortir la tension de contrôle sous forme analogique, la tension de contrôle correspondant aux données aléatoires.

4. L'assemblage de rétroéclairage de la revendication 1, comprenant de plus une unité de retour (450) adaptée pour recevoir au moins un courant revenant de la source de lumière (400, 401) et une tension appliquée à la source de lumière (400, 401), l'unité de retour (450) étant adaptée pour régler le niveau de tension du signal de gradation.

5. L'assemblage de rétroéclairage de la revendication 1, comprenant de plus un convertisseur numérique - analogique (700) adapté pour recevoir un signal de données de lumière d'une unité de contrôle de signal (600, 601), le signal de données de lumière étant un signal numérique, et pour faire sortir le signal de gradation en tant que signal analogique correspondant à ce signal de données de lumière.

6. L'assemblage de rétroéclairage de la revendication 1, comprenant de plus une unité de commutation activée par le signal de modulation d'impulsions en durée et adapté pour fournir à la source de lumière (400, 401) une tension d'excitation, la source de lumière (400, 401) recevant la tension d'excitation et émettant de la lumière en fonction de celle-ci.

7. Un appareil d'affichage (10, 11, 12, 13) comprenant: un panneau d'affichage (100) recevant un signal d'image et faisant sortir une image ; et un assemblage de rétroéclairage (500, 501, 502) selon l'une des revendications 1 à 6 fournissant de la lumière au panneau d'affichage (100).

8. Une méthode pour entraîner un assemblage de rétroéclairage (500, 501, 502) comprenant les étapes de :
a) fourniture d'un signal de gradation et sortie d'un signal de modulation d'impulsions en durée ayant un facteur de marche correspondant à un niveau de tension du signal de gradation et ayant plusieurs périodes ;
b) fourniture dudit signal de modulation d'impulsions en durée à une source de lumière (400) qui émet de la lumière basée sur le signal de modulation d'impulsions en durée ;
la méthode **caractérisée par**
c) comparaison de la tension d'un signal de fréquence aléatoire ayant plusieurs périodes que celles du signal de gradation, et sortie du signal de modulation d'impulsions en durée basé sur le résultat de la comparaison,
où, pour tout niveau de tension spécifique du signal de gradation, le facteur de marche du signal de modulation d'impulsions en durée reste constant pour toutes les différentes périodes (P1, P2, P3),
réglant ainsi une luminosité d'une source de lumière (400, 401) selon le facteur de marche du signal de modulation d'impulsions en durée.
